# EUROPEAN PATENT APPLICATION

(11) **EP 4 734 295 A1**
(43) Date of publication of application: **29.04.2026**
(21) Application number: 25211646.2
(22) Date of filing: 28.10.2025
(51) Int. Cl.: H01R 13/639, H01R 24/64, G02B 6/38, H01R 13/46, H01R 13/66

(54) **RETENTION CLIP FOR CONNECTOR**

(30) Priority: 28.10.2024 US 202463712980 P; 23.10.2025 US 202519367676
(71) Applicant: Vertiv Corporation, Westerville, OH 43082 (US)
(72) Inventor: WOOD, Christopher, Westerville, 43082 (US); DE JESUS, Christopher, Westerville, 43082 (US)
(74) Representative: Ambroz, Simon

(57) **Abstract**

A connector retention device can include a frame having a rectangular inner opening for fitting around a body of a connector, a wedge extending forwardly from a top side of the frame, a retention clip extending forwardly from a bottom side of the frame, and a rear wall extending inwardly from the frame, which can cooperate with the retention clip to position the frame about the connector. The retention clip can retain the frame about the connector. The retention clip can include a flange for engaging a forward-facing shoulder of the connector, a socket, or a housing that houses the socket. The flange can cooperate with the rear wall to hold the frame in position about the connector.

## Description

### CROSS-REFERENCE TO RELATED APPLICATION(S)

This application claims the benefit of U.S. Provisional Patent Application No. 63/712,980 filed October 28, 2024. This application also claims priority from the US Nonprovisional application US 19/367,676 filed October 23, 2025.

### TECHNICAL FIELD

The present disclosure relates generally to cabling connectors, such as IEC 60603-7 compliant connectors, and more specifically relates to retention of such cabling connectors.

### BACKGROUND

CAT-type (IEC 60603-7 compliant) connectors may unintentionally detach from an interface module or appliance in some use cases and environments. Such unintentional disconnections can result in loss of signal, communication issues and/or data errors, cable misplacement, interface misplacement, routing or connection mix up, and system and/or process downtime. A need exists in the art for improved retention of CAT-type cabling connectors.

### SUMMARY

Applicant has created new and useful devices, systems and methods for retention of CAT-type cabling connectors. A connector retention device according to the disclosure can retain a connector at least partially within a socket, such as by directly holding the connector in place and/or by preventing a locking tab of the connector from disengaging. A connector retention device according to the disclosure can require intentional disengagement by a user before a corresponding connector can be removed from the socket and/or otherwise prevent unintentional disconnections.

In at least one example, a connector retention device according to the disclosure can include a frame having a rectangular inner opening for fitting around a body of a connector, a wedge extending forwardly from a top side of the frame, a retention clip extending forwardly from a bottom side of the frame, a rear wall extending inwardly from the frame, which can cooperate with the retention clip to position the frame about the connector, or any combination thereof. In at least one example, the retention clip can include a flange for engaging a forward-facing shoulder of the connector, such as to retain the frame about the connector. **In** at least one example, the flange can cooperate with the rear wall to hold the frame in position about the connector.

In at least one example, the frame can have a split through one side. In at least one example, the split can allow the frame to be wrapped around a cable coupled to the connector. In at least one example, the split can be through the top side of the frame and/or the wedge.

In at least one example, the wedge can have a locking element, such as at the proximal end of the wedge. In at least one example, the locking element can selectively couple the split. In at least one example, the locking element can include a protrusion extending from one portion of the wedge into a cavity within another portion of the wedge. In at least one example, the locking element can include two protrusions, each extending into cavities on respective portions of the wedge.

In at least one example, the locking element can be or include a locking tag for selectively coupling the split. In at least one example, the locking tag can include at least one forwardly extending protrusion configured to slide between at least a portion of the wedge and the frame. In at least one example, the locking tag can include a first forwardly extending protrusion for sliding between at least a first portion of the wedge and the frame on a first side of the split and a second forwardly extending protrusion for sliding between at least a second portion of the wedge and the frame on a second side of the split. **In at** least one example, the frame and/or the locking tag can include one or more flanges configured to couple the locking tag to the frame. **In** at least one example, the locking tag or another portion of the device, such as the frame, can include an identification element. In at least one example, the identification element can include identifying writing, identifying printing, a radio frequency transponder, which can be coupled to and/or embedded within the locking tag or another portion of the device, or any combination thereof.

In at least one example, the wedge can have a distal end that is thinner than a proximal end. In at least one example, the wedge can fit at least partially between a tab of the connector and the body of the connector. In at least one example, the wedge can, when in position between the tab and the body of the connector, prevent the tab of the connector from moving towards the body of the connector and releasing the connector from a socket.

In at least one example, a connector retention device according to the disclosure can include a frame, a retention clip extending forwardly from a bottom of the frame, a wedge extending forwardly from a top of the frame, or any combination thereof. In at least one example, the wedge can be selectively disposed at least partially between a tab of a connector and a body of the connector. **In** at least one example, the wedge can, when in position between the tab and the body of the connector, prevent the tab of the connector from moving towards the body of the connector and releasing the connector from a socket. In at least one example, the frame can receive at least a portion the tab therein.

In at least one example, the retention clip can extend forwardly of the socket and/or a housing that houses the socket. In at least one example, the retention clip can include a flange for engaging the socket and/or the housing to retain the connector in the socket. In at least one example, the device can include a retention strap for retaining the retention clip adjacent to the housing and/or the connector in the socket. In at least one example, the retention strap can be disposed forwardly of the socket. In at least one example, the retention clip can include one or more notches to hold the retention strap in place.

In at least one example, the wedge can extend forwardly and upwardly from the top of the frame. In at least one example, a portion of the wedge, such as proximal to the frame, can be of substantially constant thickness. In at least one example, a distal end of the wedge can be thinner than a proximal end. In at least one example, the distal end of the wedge can be tapered and the proximal end can be of substantially constant thickness.

In at least one example, a connector retention device according to the disclosure can include a frame, a retention clip extending forwardly from a bottom of the frame, a cable clip extending upwardly from a top of the frame, or any combination thereof. In at least one example, the cable clip can clip to a cable extending rearwardly of the connector, such as to secure the connector to a socket.

In at least one example, the retention clip can extend forwardly of the socket and/or a housing that houses the socket. In at least one example, the retention clip can include a flange for engaging the socket and/or the housing to retain the connector in the socket. In at least one example, the device can include a retention strap for retaining the retention clip adjacent to the housing and/or the connector in the socket. In at least one example, the retention strap can be disposed forwardly of the socket. In at least one example, the retention clip can include one or more notches to hold the retention strap in place.

In at least one example, the cable clip and/or the frame can abut a body of the connector, such as when the cable clip is clipped to the cable. In at least one example, the cable clip can include a first wing for engaging a first side of the cable and a second wing for engaging a second side of the cable. In at least one example, the first wing and/or the second wing can abut the body of the connector.

### BRIEF DESCRIPTION OF THE DRAWINGS

FIG. 1 is a perspective view of one of many examples of a connector retention device according to the disclosure.
FIG. 2 is a perspective view of the connector retention device of FIG. 1, shown being installed.
FIG. 3 is a side sectional view of the connector retention device of FIG. 1, shown installed on a connector.
FIG. 4 is another perspective view of the connector retention device of FIG. 1, shown being installed.
FIG. 5 is a perspective view of the connector retention device of FIG. 1, shown installed on a connector.
FIG. 6 is a perspective view of another one of many examples of a connector retention device according to the disclosure.
FIG. 7 is a perspective view of yet another one of many examples of a connector retention device according to the disclosure.
FIG. 8 is a perspective view of still another one of many examples of a connector retention device according to the disclosure.
FIG. 9 is a perspective view of one of many examples of a locking tag according to the disclosure.
FIG. 10 is a perspective view of another one of many examples of a connector retention device according to the disclosure.
FIG. 11 is a perspective view of the locking tag of FIG. 9, shown being installed on the connector retention device of FIG. 10, which is shown installed on a connector.
FIG. 12 is a perspective view of yet another one of many examples of a connector retention device according to the disclosure, shown opened.
FIG. 13 is a perspective view of the connector retention device of FIG. 12, shown closed.
FIG. 14 is a perspective view of still another one of many examples of a connector retention device according to the disclosure.
FIG. 15 is a perspective view of the connector retention device of FIG. 14, shown installed.
FIG. 16 is a partial side sectional view of the connector retention device of FIG. 14, shown installed.
FIG. 17 is a perspective view of another one of many examples of a connector retention device according to the disclosure.
FIG. 18 is a perspective view of the connector retention device of FIG. 17, shown installed.
FIG. 19 is a perspective view of yet another one of many examples of a connector retention device according to the disclosure.
FIG. 20 is a perspective view of the connector retention device of FIG. 19, shown installed.
FIG. 21 is a partial side sectional view of the connector retention device of FIG. 19, shown installed.
FIG. 22 is a perspective view of still another one of many examples of a connector retention device according to the disclosure.
FIG. 23 is a perspective view of the connector retention device of FIG. 22, shown installed.

### DETAILED DESCRIPTION

The figures described above and the written description of specific structures and functions below are not presented to limit the scope of what Applicant has invented or the scope of the appended claims. Rather, the figures and written description are provided to teach any person skilled in the art to make and use the inventions for which patent protection is sought. Those skilled in the art will appreciate that not all features of a commercial example of the inventions are described or shown for the sake of clarity and understanding. Persons of skill in this art will also appreciate that the development of an actual commercial example incorporating aspects of the present inventions will require numerous implementation-specific decisions to achieve the developer's ultimate goal for the commercial example. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the inventions or the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Applicant has created new and useful devices, systems and methods for retention of CAT-type cabling connectors. A connector retention device according to the disclosure can retain a connector at least partially within a socket, such as by directly holding the connector in place and/or by preventing a locking tab of the connector from disengaging. A connector retention device according to the disclosure can require intentional disengagement by a user before a corresponding connector can be removed from the socket and/or otherwise prevent unintentional disconnections.

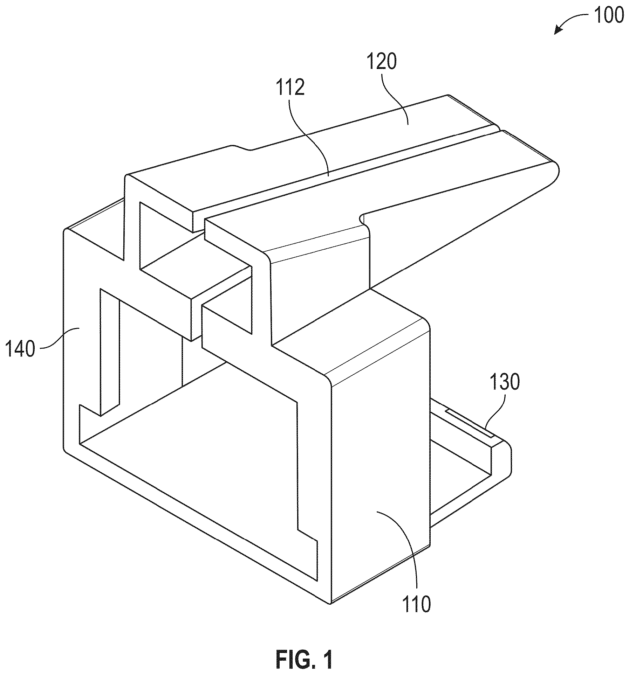

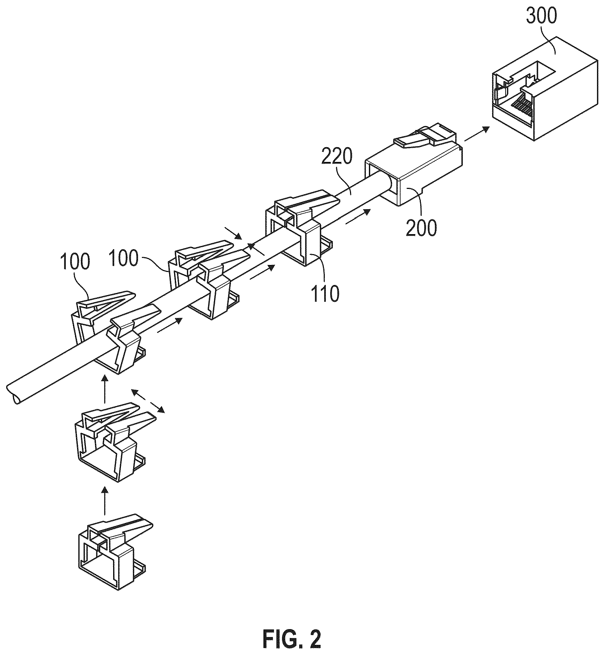

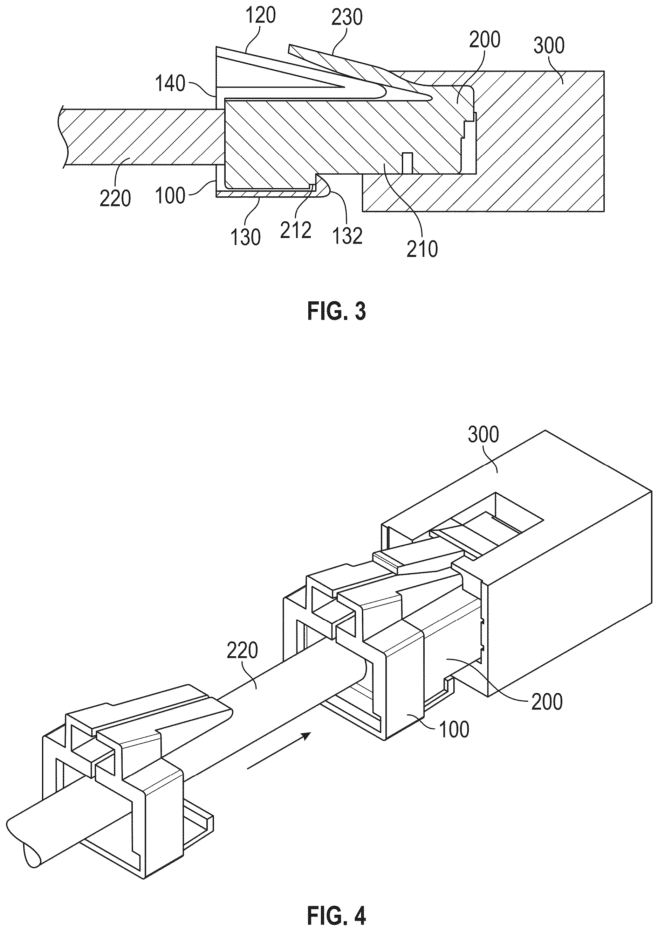

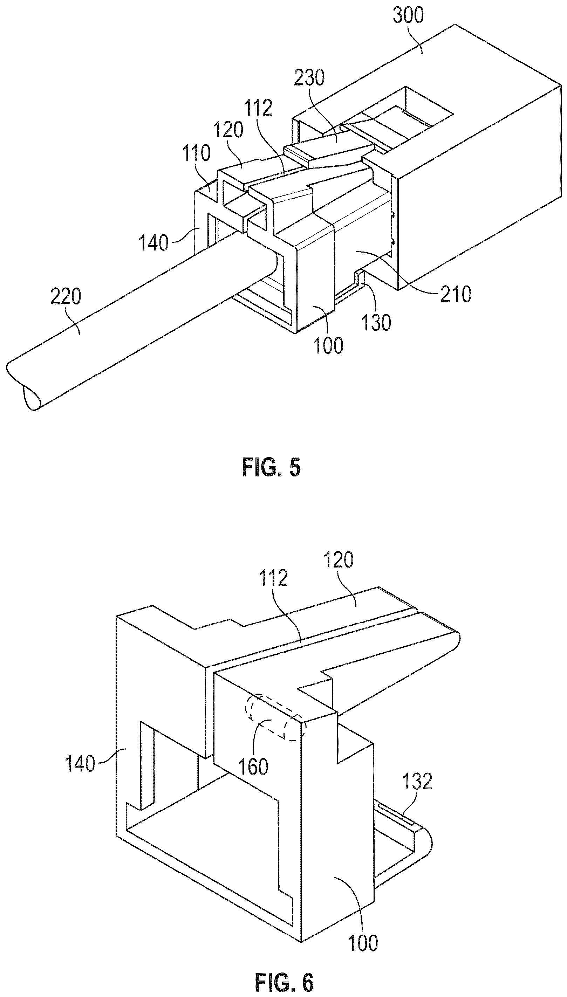

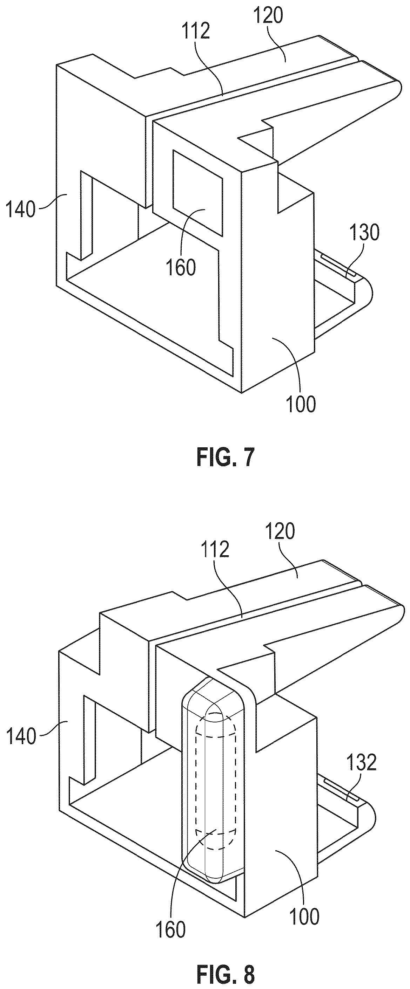

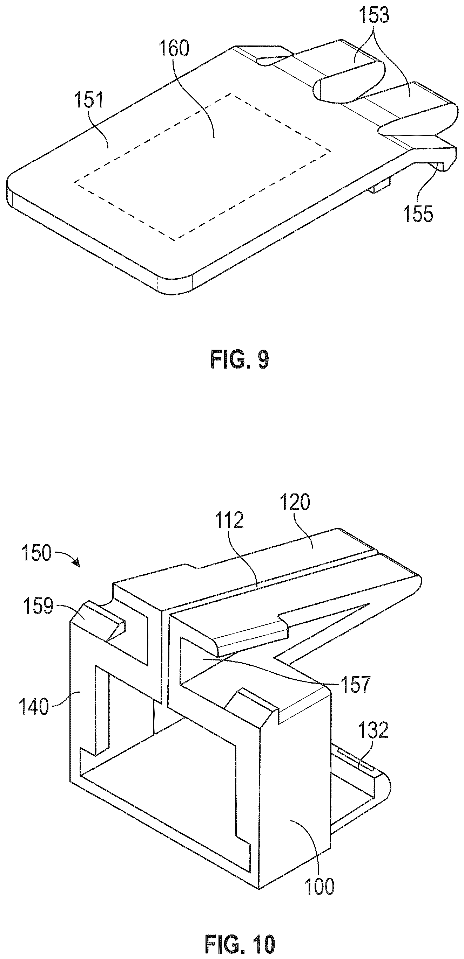

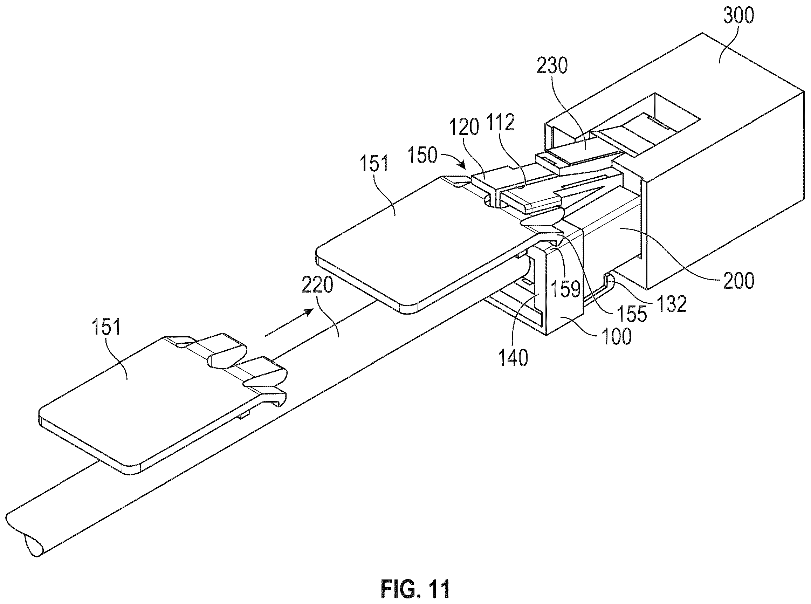

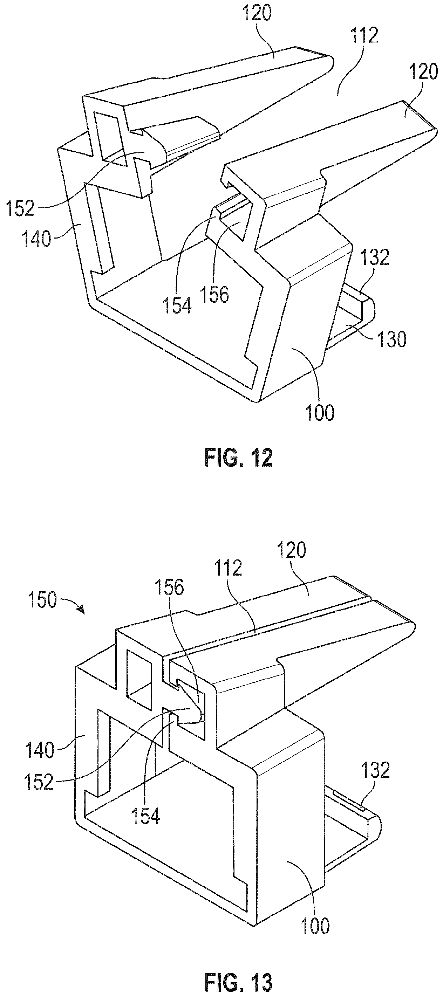

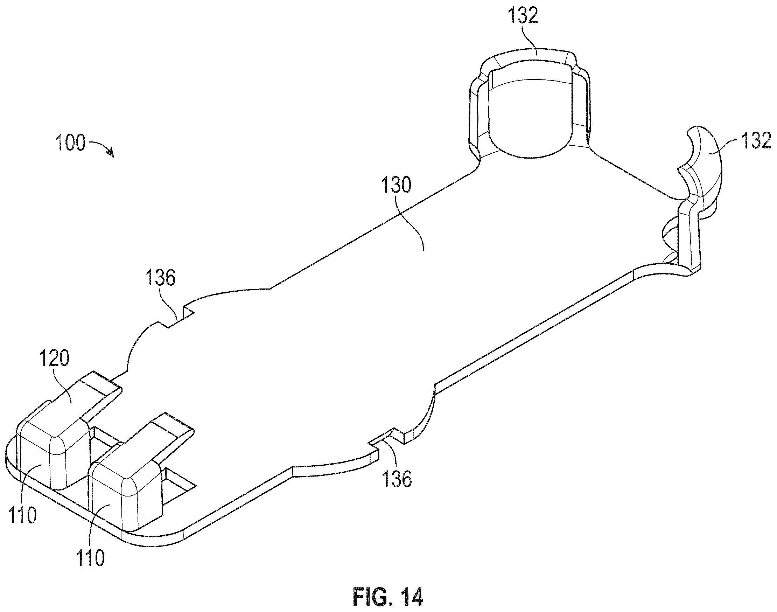

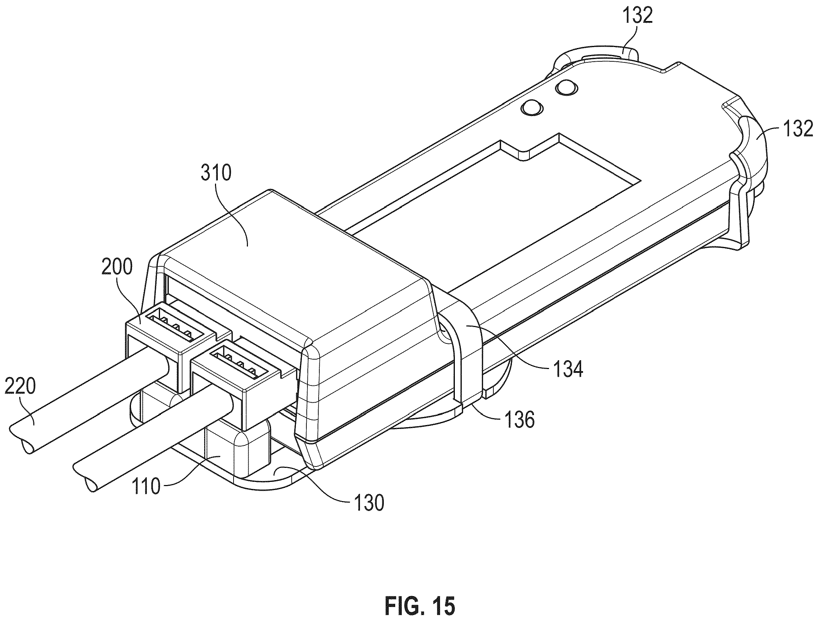

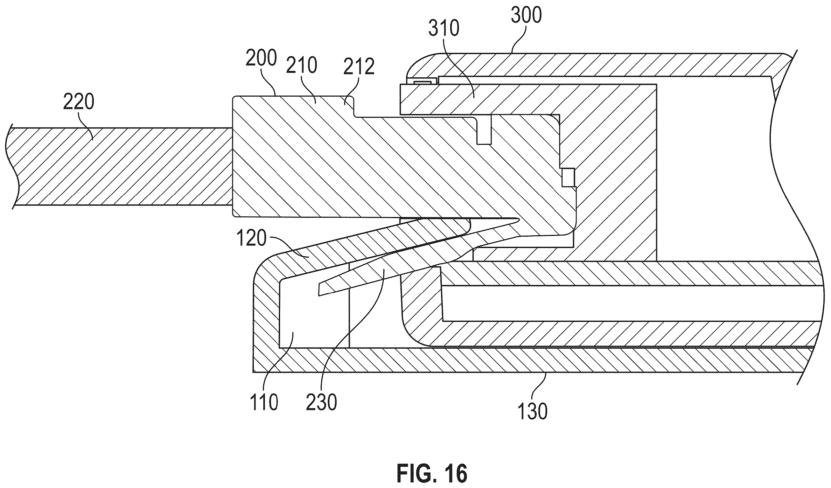

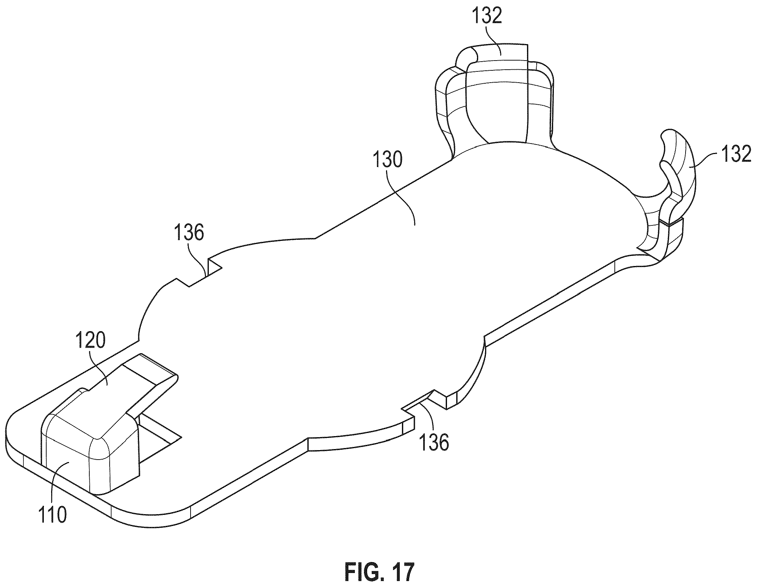

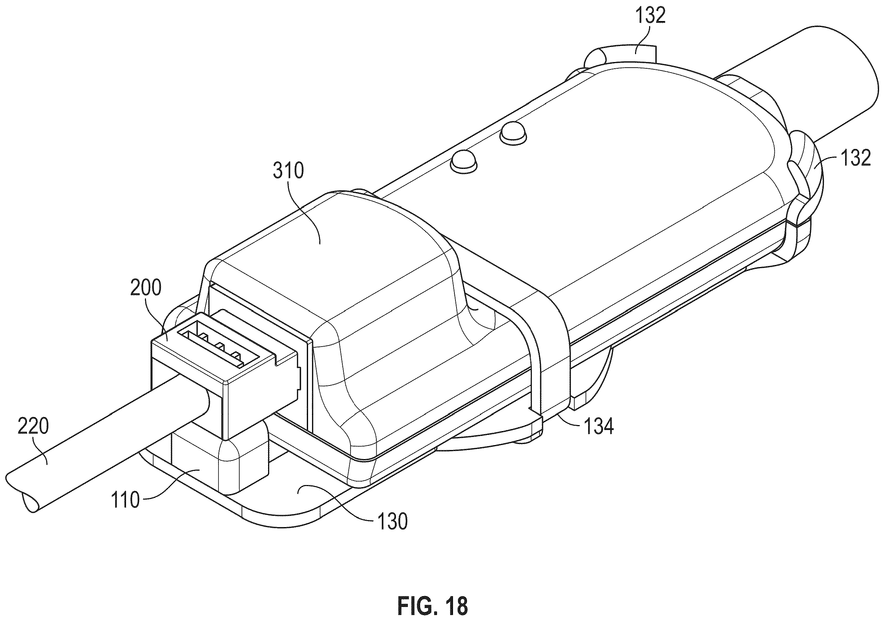

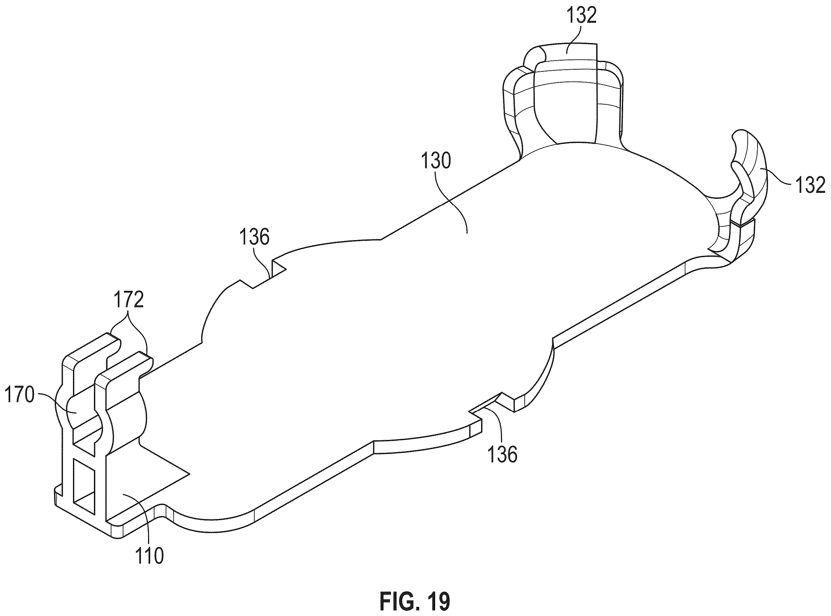

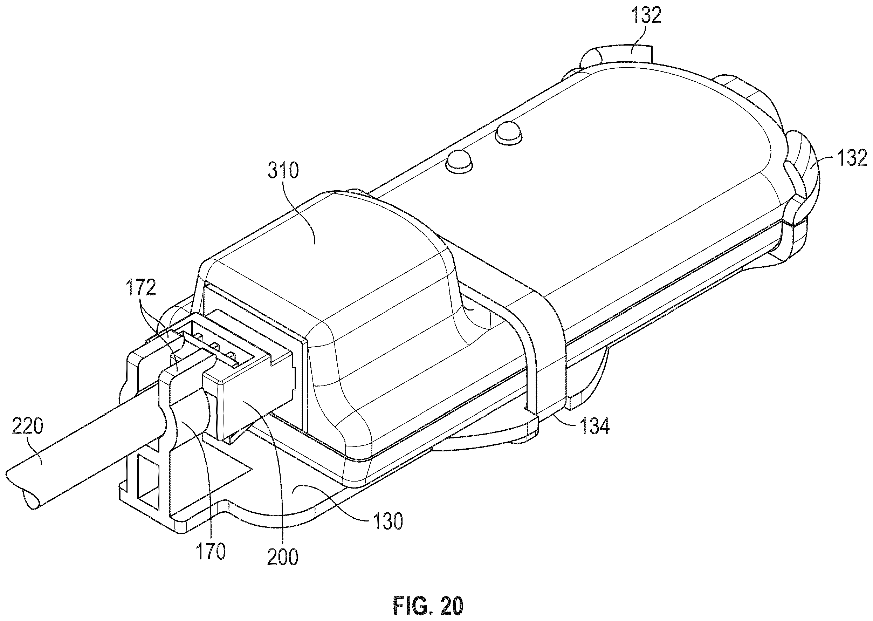

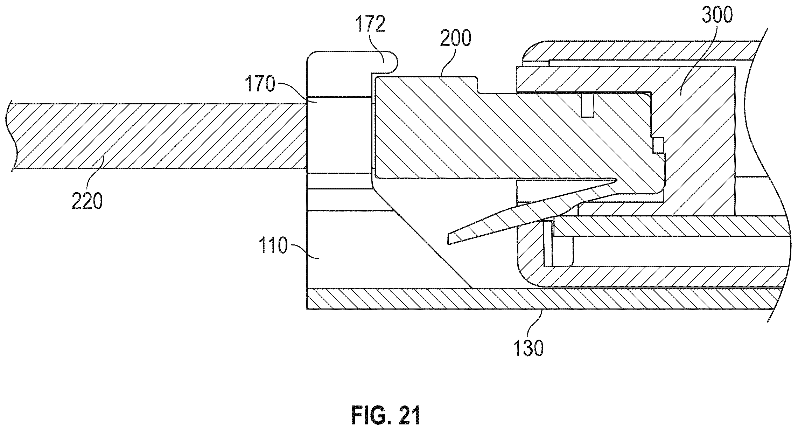

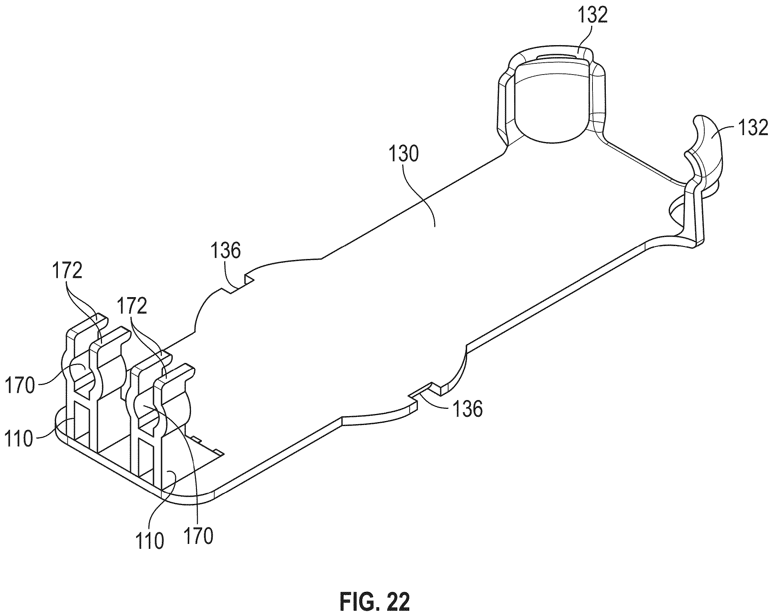

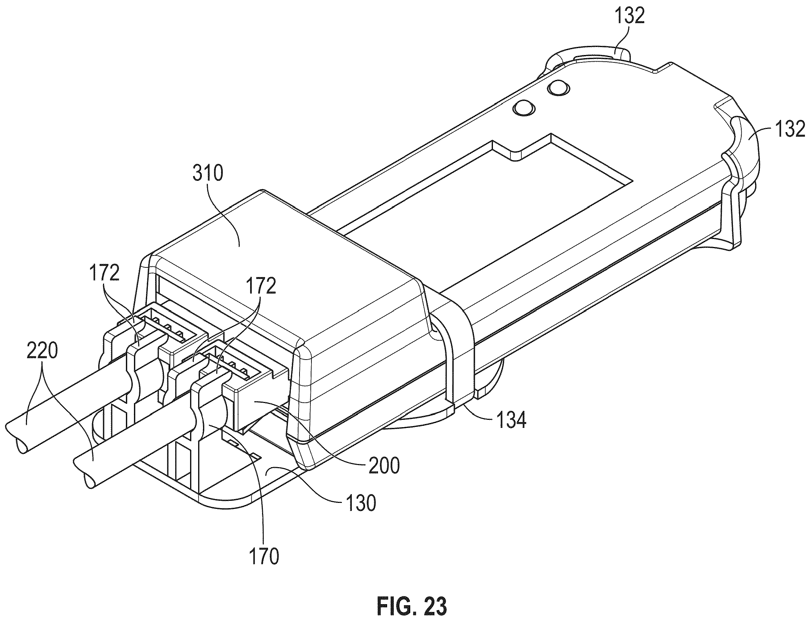

FIG. 1 is a perspective view of one of many examples of a connector retention device according to the disclosure. FIG. 2 is a perspective view of the connector retention device of FIG. 1, shown being installed. FIG. 3 is a side sectional view of the connector retention device of FIG. 1, shown installed on a connector. FIG. 4 is another perspective view of the connector retention device of FIG. 1, shown being installed. FIG. 5 is a perspective view of the connector retention device of FIG. 1, shown installed on a connector. FIG. 6 is a perspective view of another one of many examples of a connector retention device according to the disclosure. FIG. 7 is a perspective view of yet another one of many examples of a connector retention device according to the disclosure. FIG. 8 is a perspective view of still another one of many examples of a connector retention device according to the disclosure. FIG. 9 is a perspective view of one of many examples of a locking tag according to the disclosure. FIG. 10 is a perspective view of another one of many examples of a connector retention device according to the disclosure. FIG. 11 is a perspective view of the locking tag of FIG. 9, shown being installed on the connector retention device of FIG. 10, which is shown installed on a connector. FIG. 12 is a perspective view of yet another one of many examples of a connector retention device according to the disclosure, shown opened. FIG. 13 is a perspective view of the connector retention device of FIG. 12, shown closed. FIG. 14 is a perspective view of still another one of many examples of a connector retention device according to the disclosure. FIG. 15 is a perspective view of the connector retention device of FIG. 14, shown installed. FIG. 16 is a partial side sectional view of the connector retention device of FIG. 14, shown installed. FIG. 17 is a perspective view of another one of many examples of a connector retention device according to the disclosure. FIG. 18 is a perspective view of the connector retention device of FIG. 17, shown installed. FIG. 19 is a perspective view of yet another one of many examples of a connector retention device according to the disclosure. FIG. 20 is a perspective view of the connector retention device of FIG. 19, shown installed. FIG. 21 is a partial side sectional view of the connector retention device of FIG. 19, shown installed. FIG. 22 is a perspective view of still another one of many examples of a connector retention device according to the disclosure. FIG. 23 is a perspective view of the connector retention device of FIG. 22, shown installed. FIGS. 1-23 are described in conjunction with one another.

In at least one example, a connector retention device 100 according to the disclosure can retain a connector 200 at least partially within a socket 300. In at least one example, a connector 200 can be an ethernet or networking connector, such as a CAT-type (IEC 60603-7 compliant) connector. In at least one example, a socket 300 can be part of, or can be operably coupled to, a server network adapter, a network switch, a router, a hub, other information technology (IT) equipment, or any combination thereof.

In at least one example, a connector retention device 100 according to the disclosure can include one or more frames 110, one or more wedges 120 extending forwardly from the frame 110, one or more retention clips 130 extending forwardly from the frame 110, one or more rear walls 140 extending inwardly from the frame 110, or any combination thereof (see, e.g., FIGS. 1-13). In at least one example, the frame 110 can have a rectangular inner opening for fitting around a body 210 of a connector 200. In at least one example, the wedge 120 can extend forwardly from a top side of the frame 110. In at least one example, the retention clip 130 can extend forwardly from a bottom side of the frame 110. In at least one example, the rear wall 140 can cooperate with the retention clip 130 to position the frame 110 about the connector 200.

In at least one example, the retention clip 130 can include one or more flanges 132, which can engage a forward-facing shoulder 212 of the connector 200. **In** at least one example, the flange 132 can retain the frame 110 about the connector 200. In at least one example, the flange 132 can cooperate with the rear wall 140 to hold the frame 110 in position about the connector 200.

In at least one example, the frame 110 can have one or more splits 112 through one or more sides. In at least one example, the split 112 can allow the frame 110 to be opened and/or wrapped around a cable 220 coupled to the connector 200. In at least one example, the split 112 can be disposed at least partially through the top side of the frame 110 and/or the wedge 120.

In at least one example, the device 100 can include one or more locking elements 150, such as a closure or other coupler structure, for selectively coupling one or more portions of the wedge 120 together. In at least one example, at least a portion of one or more locking elements 150 can be disposed at the proximal end of the wedge 120. In at least one example, the locking element 150 can be arranged for selectively closing the split 112 or coupling one or more portions of the wedge 120 on opposing sides of the split 112.

In at least one example, the locking element 150 can be fixedly attached to the wedge 120 (which can, but need not, include being formed integrally therewith). For example, the locking element 150 can include a protrusion 152 arranged for extending from one portion of the wedge 120 at least partially into a cavity 156 within another portion of the wedge 120 and coupling with the cavity 156 and/or a flange 154 to couple the wedge portions together (see, e.g., FIGS. 12-13). The coupling can be permanent or removeable. Furthermore, while only a single protrusion 152 and cavity 156 are shown in FIGS. 12-13 for illustrative purposes, in at least one example, the locking element 150 can include two or more protrusions 152 for coupling with one or more corresponding cavities 156 on respective portions of the wedge 120. Similarly, in at least one example, each portion of the wedge 120 can include a combination of one or more protrusions 152 and one or more cavities 156.

In at least one example, at least a portion of the locking element 150 can be removably coupled with the wedge 120 and at least a portion of the locking element 150 can be fixedly attached to the wedge 120 (which can, but need not, include being formed integrally therewith). For example, in at least one example, the locking element 150 can include one or more locking tags 151 for selectively coupling with one or more cavities 157 and/or flanges 155 on the wedge 120 to couple the split 112 (see, e.g., FIGS. 9-11). In at least one example, the locking tag 151 can include one or more forwardly extending protrusions 153 arranged to slide between at least a portion of the wedge 120 and the frame 110 for coupling device 100 to connector 200. **In** at least one example, the locking tag 151 can include a first forwardly extending protrusion 153 for sliding between at least a first portion of the wedge 120 and the frame 110 on a first side of the split 112 and a second forwardly extending protrusion 153 for sliding between at least a second portion of the wedge 120 and the frame 110 on a second side of the split 112. **In** at least one example, the frame 110 and/or the locking tag 151 can include one or more flanges 155, 159 for coupling the locking tag 151 with the frame 110 and/or the wedge 120. **In** at least one example, the protrusion(s) 153 and/or flanges 155 can cooperate with the cavities 157 and/or flange(s) 159 to hold the locking tag 151 in place and/or hold the split 112 at least partially closed. In at least one example, removal of the locking tag 151 can provide for uncoupling of the split 112.

In at least one example, the locking element 150 or another portion of the device 100, such as the frame 110, can include one or more identification elements 160. **In at** least one example, the identification element 160 can include identifying writing, identifying printing, a barcode, a hologram, a radio frequency transponder (which can be coupled to and/or embedded within the locking element 150 or another portion of the device 100), or any combination thereof. In at least one example, the identification element 160 can allow a user to assign or attach identification or detailed information specific to the connector 200, the cable 200, the socket 300, or any number of data points pertinent to the connection(s). In at least one example, the identification element 160 can be read and/or data can be written or accessed using an application or code reader. **In** at least one example, the identification element 160 can provide a user with relevant attributes either from locally stored data or an auxiliary database.

In at least one example, the wedge 120 can have a distal end that is thinner than a proximal end. In at least one example, the wedge 120 can fit at least partially between a tab 230 of the connector 200 and the body 210 of the connector 200. **In** at least one example, the wedge 120 can, when in position between the tab 230 and the body 210 of the connector 200, prevent the tab 230 of the connector 200 from moving towards the body 210 of the connector 200 and/or releasing the connector 200 from a socket 300.

In at least one example, a connector retention device 100 according to the disclosure can include one or more frames 110, one or more retention clips 130 extending from the frame 110, one or more wedges 120 extending from the frame 110, or any combination thereof. In at least one example, the retention clip 130 can extend forwardly from a bottom of the frame 110. In at least one example, the wedge 120 can extend forwardly from a top of the frame 110. **In** at least one example, the wedge 120 can be selectively disposed at least partially between a tab 230 of a connector 200 and a body 210 of the connector 200. In at least one example, the wedge 200 can, when in position between the tab 230 and the body 210 of the connector 200, prevent the tab 230 of the connector 200 from moving towards the body 210 of the connector 200 and releasing the connector 200 from a socket 300. In at least one example, the frame 110 can be arranged for receiving at least a portion the tab 230 therein.

In at least one example, the retention clip 130 can extend forwardly of the socket 300 and/or a housing 310 that houses the socket 300 (see, e.g., FIGS. 14-23). **In** at least one example, the retention clip 130 can include one or more flanges 132 for engaging the socket 300 and/or the housing 310 to retain the connector 200 in the socket 300. **In at** least one example, the device 100 can include one or more retention straps 134 for retaining the retention clip 130 adjacent to the housing 310 and/or the connector 200 in the socket 300. In at least one example, the retention strap 134 can be disposed forwardly of the socket 300. In at least one example, the retention clip 130 can include one or more notches 136 arranged for coupling with the retention strap 134 to hold the retention strap 134 in place.

In at least one example, the wedge 120 can extend forwardly and upwardly from the top of the frame 110. In at least one example, a portion of the wedge 120, such as proximal to the frame 110, can be of an at least substantially constant thickness. **In at** least one example, a distal end of the wedge 120 can be thinner than a proximal end. In at least one example, the distal end of the wedge 120 can be tapered and the proximal end can be of an at least substantially constant thickness.

In at least one example, a connector retention device 100 according to the disclosure can include one or more frames 110, one or more retention clips 130 extending from the frame 110, one or more cable clips 170 extending from the frame 110, (see, e.g., FIGS. 19-23), or any combination thereof. In at least one example, the retention clip 130 can extend forwardly from a bottom of the frame 110. In at least one example, the cable clip 170 can extend upwardly from a top of the frame 110. In at least one example, the cable clip 170 can clip to a cable 220 that extends rearwardly of the connector 200. In at least one example, the cable clip 170 can secure and/or support coupling of the connector 200 to a socket 300.

In at least one example, the retention clip 130 can extend forwardly of the socket 300 and/or a housing 310 that houses the socket 300. In at least one example, the retention clip 130 can include one or more flanges 132 for engaging the socket 300 and/or the housing 310 to retain the connector 300 in the socket 300. In at least one example, the device 100 can include one or more retention straps 134 for retaining the retention clip 130 adjacent to the housing 310 and/or the connector 200 in the socket 300. In at least one example, the retention strap 134 can be disposed forwardly of the socket 300. In at least one example, the retention clip 130 can include one or more notches 136 arranged for coupling with the retention strap 134 to hold the retention strap 134 in place.

In at least one example, the cable clip 170 and/or the frame 110 can abut a body 210 of the connector 200, such as when the cable clip 170 is clipped to the cable 220. In at least one example, the cable clip 170 can include one or more wings 172 for engaging the cable 220. In at least one example, the cable clip 170 can include a first wing 172 for engaging a first side of the cable 220 and a second wing 172 for engaging a second side of the cable 220. In at least one example, the first wing 172 and/or the second wing 172 can abut or be disposed adjacent to the body 210 of the connector 200.

In at least one example, a connector retention device according to the disclosure can include a frame having a rectangular inner opening for fitting around a body of a connector, a wedge extending forwardly from a top side of the frame, a retention clip extending forwardly from a bottom side of the frame, a rear wall extending inwardly from the frame, which can cooperate with the retention clip to position the frame about the connector, or any combination thereof. In at least one example, the retention clip can include a flange for engaging a forward-facing shoulder of the connector, such as to retain the frame about the connector. In at least one example, the flange can cooperate with the rear wall to hold the frame in position about the connector.

In at least one example, the frame can have a split through one side. In at least one example, the split can allow the frame to be wrapped around a cable coupled to the connector. In at least one example, the split can be through the top side of the frame and/or the wedge.

In at least one example, the wedge can have a locking element, such as at the proximal end of the wedge. In at least one example, the locking element can selectively couple the split. In at least one example, the locking element can include a protrusion extending from one portion of the wedge into a cavity within another portion of the wedge. In at least one example, the locking element can include two protrusions, each extending into cavities on respective portions of the wedge.

In at least one example, the locking element can be or include a locking tag for selectively coupling the split. In at least one example, the locking tag can include at least one forwardly extending protrusion configured to slide between at least a portion of the wedge and the frame. In at least one example, the locking tag can include a first forwardly extending protrusion for sliding between at least a first portion of the wedge and the frame on a first side of the split and a second forwardly extending protrusion for sliding between at least a second portion of the wedge and the frame on a second side of the split. In at least one example, the frame and/or the locking tag can include one or more flanges configured to couple the locking tag to the frame. In at least one example, the locking tag or another portion of the device, such as the frame, can include an identification element. In at least one example, the identification element can include identifying writing, identifying printing, a radio frequency transponder, which can be coupled to and/or embedded within the locking tag or another portion of the device, or any combination thereof.

In at least one example, the wedge can have a distal end that is thinner than a proximal end. In at least one example, the wedge can fit at least partially between a tab of the connector and the body of the connector. In at least one example, the wedge can, when in position between the tab and the body of the connector, prevent the tab of the connector from moving towards the body of the connector and releasing the connector from a socket.

In at least one example, a connector retention device according to the disclosure can include a frame, a retention clip extending forwardly from a bottom of the frame, a wedge extending forwardly from a top of the frame, or any combination thereof. In at least one example, the wedge can be selectively disposed at least partially between a tab of a connector and a body of the connector. In at least one example, the wedge can, when in position between the tab and the body of the connector, prevent the tab of the connector from moving towards the body of the connector and releasing the connector from a socket. In at least one example, the frame can receive at least a portion the tab therein.

In at least one example, the retention clip can extend forwardly of the socket and/or a housing that houses the socket. In at least one example, the retention clip can include a flange for engaging the socket and/or the housing to retain the connector in the socket. In at least one example, the device can include a retention strap for retaining the retention clip adjacent to the housing and/or the connector in the socket. In at least one example, the retention strap can be disposed forwardly of the socket. In at least one example, the retention clip can include one or more notches to hold the retention strap in place.

In at least one example, the wedge can extend forwardly and upwardly from the top of the frame. In at least one example, a portion of the wedge, such as proximal to the frame, can be of substantially constant thickness. In at least one example, a distal end of the wedge can be thinner than a proximal end. In at least one example, the distal end of the wedge can be tapered and the proximal end can be of substantially constant thickness.

In at least one example, a connector retention device according to the disclosure can include a frame, a retention clip extending forwardly from a bottom of the frame, a cable clip extending upwardly from a top of the frame, or any combination thereof. In at least one example, the cable clip can clip to a cable extending rearwardly of the connector, such as to secure the connector to a socket.

In at least one example, the retention clip can extend forwardly of the socket and/or a housing that houses the socket. In at least one example, the retention clip can include a flange for engaging the socket and/or the housing to retain the connector in the socket. In at least one example, the device can include a retention strap for retaining the retention clip adjacent to the housing and/or the connector in the socket. In at least one example, the retention strap can be disposed forwardly of the socket. In at least one example, the retention clip can include one or more notches to hold the retention strap in place.

In at least one example, the cable clip and/or the frame can abut a body of the connector, such as when the cable clip is clipped to the cable. In at least one example, the cable clip can include a first wing for engaging a first side of the cable and a second wing for engaging a second side of the cable. In at least one example, the first wing and/or the second wing can abut the body of the connector.

For example, the devices, systems and methods can be implemented for numerous different types and sizes in numerous different industries. Further, the various methods and examples of the devices, systems and methods can be included in combination with each other to produce variations of the disclosed methods and examples. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other examples and not every example of the inventions has been described. Obvious modifications and alterations to the described examples are available to those of ordinary skill in the art having the benefits of the present disclosure. The disclosed and undisclosed examples are not intended to limit or restrict the scope or applicability of the inventions conceived of by the Applicant, but rather, in conformity with the patent laws, Applicant intends to fully protect all such modifications and improvements that come within the scope or range of equivalents of the following claims.

Described herein are also the following clauses:
1. A connector retention device comprising: a frame having a rectangular inner opening configured to fit around a body of a connector; a wedge extending forwardly from a top side of the frame and having a distal end that is thinner than a proximal end; and
   a retention clip extending forwardly from a bottom side of the frame.
2. The device as set forth in clause 1, wherein the frame includes a split through one side and wherein the split is configured to allow the frame to be wrapped around a cable coupled to the connector.
3. The device as set forth in clause 2, wherein the split is disposed through the top side of the frame and the wedge.
4. The device as set forth in clause 3, wherein the proximal end of the wedge includes a locking element and wherein the locking element is configured to selectively couple the split.
5. The device as set forth in clause 4, wherein the locking element comprises a protrusion extending from one portion of the wedge into a cavity within another portion of the wedge.
6. The device as set forth in clause 2, further including a locking tag configured to selectively couple the split.
7. The device as set forth in clause 6, wherein the locking tag includes at least one forwardly extending protrusion configured to slide between at least a portion of the wedge and the frame.
8. The device as set forth in clause 6, wherein the locking tag includes a first forwardly extending protrusion configured to slide between at least a first portion of the wedge and the frame on a first side of the split and a second forwardly extending protrusion configured to slide between at least a second portion of the wedge and the frame on a second side of the split.
9. The device as set forth in clause 6, wherein the locking tag includes at least one flange configured to couple the locking tag to the frame.
10. The device as set forth in clause 6, wherein the locking tag includes an identification element.
11. The device as set forth in clause 10, wherein the identification element includes a radio frequency transponder embedded within the locking tag.
12. The device as set forth in clause 1, wherein the retention clip includes a flange configured to engage a forward-facing shoulder of the connector and to retain the frame about the connector.
13. The device as set forth in clause 1, further including a rear wall extending inwardly from the frame and configured to cooperate with the retention clip to position the frame about the connector.
14. The device as set forth in clause 1, wherein the wedge is configured to fit at least partially between a tab of the connector and the body of the connector and wherein the wedge is further configured to, when in position between the tab and the body of the connector, prevent the tab of the connector from moving towards the body of the connector and releasing the connector from a socket.
15. The device as set forth in clause 1, further including an identification element.
16. The device as set forth in clause 15, wherein the identification element includes a radio frequency transponder embedded within the frame.
17. A connector retention device comprising: a frame; a retention clip extending forwardly from a bottom of the frame; and a wedge extending forwardly from a top of the frame; wherein the wedge is configured to be selectively disposed at least partially between a tab of a connector and a body of the connector; and wherein the wedge is further configured to, when in position between the tab and the body of the connector, prevent the tab of the connector from moving towards the body of the connector and releasing the connector from a socket.
18. The device as set forth in clause 17, wherein the frame is further configured to receive at least a portion the tab therein.
19. The device as set forth in clause 17, wherein the retention clip extends forwardly of the socket.
20. The device as set forth in clause 19, wherein the retention clip extends forwardly of a housing that houses the socket.
21. The device as set forth in clause 19, further including a retention strap disposed forwardly of the socket and configured to retain the retention clip adjacent to the housing.
22. The device as set forth in clause 17, wherein the wedge extends forwardly and upwardly from the top of the frame.
23. The device as set forth in clause 17, wherein a portion of the wedge proximal to the frame is of substantially constant thickness.
24. The device as set forth in clause 23, wherein a distal end of the wedge is thinner than a proximal end.
25. A connector retention device comprising: a frame; a retention clip extending forwardly from a bottom of the frame; and a cable clip extending upwardly from a top of the frame, wherein the cable clip is configured to clip to a cable extending rearwardly of the connector to secure the connector to a socket.
26. The device as set forth in clause 25, wherein the retention clip extends forwardly of the socket.
27. The device as set forth in clause 26, wherein the retention clip extends forwardly of a housing that houses the socket.
28. The device as set forth in clause 26, further including a retention strap disposed forwardly of the socket and configured to retain the retention clip adjacent to the housing.
29. The device as set forth in clause 26, wherein the cable clip abuts a body of the connector, when clipped to the cable.
30. The device as set forth in clause 29, wherein the cable clip includes a first wing configured to engage a first side of the cable and abut the body of the connector and a second wing configured to engage a second side of the cable and abut the body of the connector.

## Claims

1. A connector retention device comprising:
a frame having a rectangular inner opening configured to fit around a body of a connector;
a wedge extending forwardly from a top side of the frame and having a distal end that is thinner than a proximal end; and
a retention clip extending forwardly from a bottom side of the frame.

2. The device as set forth in claim 1, wherein the frame includes a split through one side and wherein the split is configured to allow the frame to be wrapped around a cable coupled to the connector.

3. The device as set forth in claim 2, wherein the split is disposed through the top side of the frame and the wedge;
and optionally, the proximal end of the wedge includes a locking element and wherein the locking element is configured to selectively couple the split;
and optionally, wherein the locking element comprises a protrusion extending from one portion of the wedge into a cavity within another portion of the wedge.

4. The device according to any one of the claims 2 to 3, further including a locking tag configured to selectively couple the split;
and optionally, wherein the locking tag includes at least one forwardly extending protrusion configured to slide between at least a portion of the wedge and the frame.

5. The device as set forth in claim 4, wherein the locking tag includes a first forwardly extending protrusion configured to slide between at least a first portion of the wedge and the frame on a first side of the split and a second forwardly extending protrusion configured to slide between at least a second portion of the wedge and the frame on a second side of the split.

6. The device according to any one of the 4 to 5, wherein the locking tag includes at least one flange configured to couple the locking tag to the frame.

7. The device as set forth in claim 6, wherein the locking tag includes an identification element.

8. The device as set forth in claim 7, wherein the identification element includes a radio frequency transponder embedded within the locking tag and/or within the frame.

9. The device according to any preceding claim, wherein the retention clip includes a flange configured to engage a forward-facing shoulder of the connector and to retain the frame about the connector.

10. The device according to any preceding claim, further including a rear wall extending inwardly from the frame and configured to cooperate with the retention clip to position the frame about the connector.

11. The device according to any preceding claim, wherein the wedge is configured to fit at least partially between a tab of the connector and the body of the connector and wherein the wedge is further configured to, when in position between the tab and the body of the connector, prevent the tab of the connector from moving towards the body of the connector and releasing the connector from a socket;
and optionally, wherein the frame is further configured to receive at least a portion of the tab therein.

12. The device as set forth in claim 11, wherein the retention clip extends forwardly of the socket;
and optionally, wherein the retention clip extends forwardly of a housing that houses the socket;
and optionally, the device further including a retention strap disposed forwardly of the socket and configured to retain the retention clip adjacent to the housing.

13. The device according to any preceding claim, wherein the wedge extends forwardly and upwardly from the top of the frame.

14. The device according to any preceding claim, wherein a portion of the wedge proximal to the frame is of substantially constant thickness.

15. The device according to any preceding claim, further comprising:
a cable clip extending upwardly from a top of the frame, wherein the cable clip is configured to clip to a cable extending rearwardly of the connector to secure the connector to a socket;
and optionally, wherein the cable clip abuts a body of the connector, when clipped to the cable;
and optionally, wherein the cable clip includes a first wing configured to engage a first side of the cable and abut the body of the connector and a second wing configured to engage a second side of the cable and abut the body of the connector.
